# FASCICULE DE BREVET EUROPEEN

(11) **EP 4 076 872 B1**
(45) Date de publication et mention de la délivrance du brevet: **07.05.2025**
(21) Numéro de dépôt: 20845600.4
(22) Date de dépôt: 17.12.2020
(51) Int. Cl.: B25J 21/02, G21F 7/047

(54) **ENSEMBLE FORMANT PORTE PERMETTANT UN MONTAGE AMELIORE SUR LES PAROIS D'UNE ENCEINTE, ET ENCEINTE COMPORTANT UN TEL ENSEMBLE DE PORTE**
TÜRANORDNUNG ZUR VERBESSERTEN MONTAGE AN DEN WÄNDEN EINES GEHÄUSES UND GEHÄUSE MIT EINER SOLCHEN TÜRANORDNUNG
DOOR ASSEMBLY ALLOWING IMPROVED INSTALLATION ON THE WALLS OF AN ENCLOSURE, AND ENCLOSURE COMPRISING SUCH A DOOR ASSEMBLY

(30) Priorité: 19.12.2019 FR 1914959
(43) Date de publication de la demande: 26.10.2022
(73) Titulaire: ABC Transfer, 37170 Chambray-les-Tours (FR)
(72) Inventeur: FELIX, Julien, 41100 VENDOME (FR); SCHNEIDER, Jean-Luc, 41100 SAINT FIRMIN DES PRES (FR); GIRARD, Thierry, 75116 PARIS (FR)
(74) Mandataire: IP Trust
(86) Numéro de dépôt international: PCT/FR2020/052503
(87) Numéro de publication internationale: WO 2021/123641

(56) Documents cités:
- EP-A1- 0 418 160
- EP-A1- 0 720 895
- EP-A1- 3 466 618
- FR-A1- 2 834 582
- FR-A1- 2 858 827

## Description

### DOMAINE TECHNIQUE DE L'INVENTION

La présente invention concerne un ensemble formant porte destiné à équiper un premier volume clos et apte à permettre un raccordement étanche d'un deuxième volume clos sur le premier volume clos pour le transfert transférer des produits de l'un à l'autre sans rupture du confinement. Il peut s'agir par exemple du transfert de produits dangereux comme certains produits biologiques, chimiques ou radioactifs, du transfert de composants tels que bouchons, flacons, pistons, seringues, etc., du transfert de dispositifs de contrôle environnementaux tels que des plaques de milieu de culture, des compteurs particulaires, etc., du transfert de systèmes de nettoyage, du transfert de liquides, de poudres, d'outils, du transfert de déchets vers l'extérieur de l'enceinte et/ou du transfert de tout élément nécessaire à la production ou à la maintenance de la ligne de production.

Par volume, on entend dans la présente demande tout produit, équipement ou installation délimitant un volume. Ainsi, il peut s'agir d'une enceinte, d'un isolateur, d'un récipient, d'un conteneur, d'un sac, etc.

Par volume clos, on entend un volume isolé du milieu extérieur. Il peut s'agir notamment, mais non exclusivement, d'un volume de préparation, de stockage et/ou de manipulation de produits ne devant pas être en contact avec l'extérieur ou avec un utilisateur.

L'ensemble formant porte est destiné notamment, mais non exclusivement, à être monté sur enceinte présentant une paroi en verre.

### ETAT DE LA TECHNIQUE

Le transfert de produits d'un volume clos à un autre sans que le confinement de ces volumes ne soit rompu est une problématique délicate à résoudre. Pour répondre à celle-ci, des dispositifs de jonction étanches à double porte ont été développés. Citons par exemple ceux décrits dans les demandes de brevet FR2777822 et FR3036054.

Ces dispositifs de jonction double porte sont formés par un premier et un deuxième ensemble porte/bride, l'un des ensembles porte/bride étant celui d'une des volumes, l'autre ensemble porte/bride étant celui de l'autre volume. Classiquement, le volume clos à raccorder est un récipient de type conteneur ou poche transportable tandis que l'autre volume clos sur lequel est raccordé le récipient est généralement une enceinte de manipulation fixe. Le raccordement du récipient à l'enceinte de manipulation est effectué par raccordement des ensembles porte/bride entre eux. Ce raccordement est réalisé généralement par la mise en prise d'un système dit à baïonnettes - des oreilles mâles de la bride et de la porte du récipient venant s'engager respectivement dans des encoches de la bride et de la porte de enceinte de manipulation - suivi d'une rotation du récipient permettant le verrouillage de la bride du récipient sur la bride de l'enceinte de manipulation ainsi que le verrouillage de la porte du récipient sur la porte de l'enceinte, le déverrouillage des portes raccordées l'une à l'autre étant réalisé par déverrouillage des portes de leurs brides respectives.

Dans les équipements de l'art antérieur, les ensembles de porte sont en général fixés sur les parois de l'enceinte par vissage directement des brides sur les parois de l'enceinte. La demande de brevet FR2834582 montre un tel arrangement. Une telle fixation s'avère cependant problématique lorsque les parois de l'enceinte sont réalisées en des matériaux relativement fragile comme des parois en verre ou en plastique transparent tel que du PMMA (polyméthacrylate de méthyle), celles-ci pouvant être endommagées du fait de leur traversée par les vis d'assemblage et par conséquent présenter des zones de fragilisation et donc un risque de rupture du confinement.

L'invention vise à remédier à ces problèmes en proposant un ensemble de porte, et une enceinte comportant un tel ensemble de porte, pouvant être assemblé de manière simple, rapide, et aisée sans altération des parois de l'enceinte sur laquelle il est monté.

### OBJET DE L'INVENTION

A cet effet, et selon un premier aspect, l'invention propose un ensemble formant porte pour enceinte étanche selon la revendication 1.

La paroi de l'enceinte est ainsi prise en « sandwich » entre les couronnes intérieures et extérieures et enserrée entre ces dernières le serrage s'effectuant de couronne à couronne sans que la paroi de l'enceinte ne soit traversée.

Les deux éléments de bride sont des pièces distinctes et indépendantes l'une de l'autre. Elles sont assemblées l'une avec l'autre de manière réversible.

Avantageusement, l'ensemble formant porte comporte au moins une rondelle de protection destinée à être disposée entre la surface d'appui de l'un au moins de éléments de bride et la portion de paroi.

Avantageusement, l'ensemble formant porte comporte au moins un joint d'étanchéité destiné à s'intercaler entre la surface d'appui de l'un au moins de éléments de bride et la portion de paroi.

Avantageusement, l'ensemble formant porte comporte une entretoise arrangée pour être disposée entre deux éléments de paroi formant la paroi de ladite enceinte.

Avantageusement, l'ensemble formant porte est arrangé pour permettre le raccordement étanche d'un ensemble formant porte équipant un conteneur par l'intermédiaire d'un système à baïonnettes.

L'invention concerne également une enceinte étanche comportant au moins une ouverture de passage pourvue d'un ensemble de porte tel que décrit précédemment.

### BREVE DESCRIPTION DES FIGURES

D'autres caractéristiques et avantages de l'invention ressortiront de la description détaillée de l'invention qui va suivre en référence aux figures annexées et dans lesquelles :
- La figure 1 représente un premier exemple de réalisation d'un ensemble formant porte monté sur une simple paroi d'enceinte ;
- La figure 2 représente une vue en coupe transversale de l'ensemble formant porte de la figure 1 ;
- La figure 3 représente un deuxième exemple de réalisation d'un ensemble formant porte monté sur une double paroi d'enceinte ;
- La figure 4 représente une vue en coupe transversale de l'ensemble formant porte de la figure 3.

Pour plus de clarté, les éléments identiques ou similaires des différents modes de réalisation sont repérés par des signes de référence identiques sur l'ensemble des figures.

### DESCRIPTION DETAILLEE DE L'INVENTION

Dans ce qui suit, les termes « extérieur » et « intérieur » sont définis par rapport à l'enceinte sur laquelle l'ensemble formant porte est monté. Ainsi, on désigne par « extérieur » ce qui est situé hors de l'espace intérieur de l'enceinte, le plus éloigné de l'espace intérieur ou dirigé à l'opposé de l'intérieur de l'enceinte et par « intérieur » ce qui est situé dans l'espace intérieur, le plus proche de l'espace intérieur ou dirigé vers l'intérieur de l'enceinte.

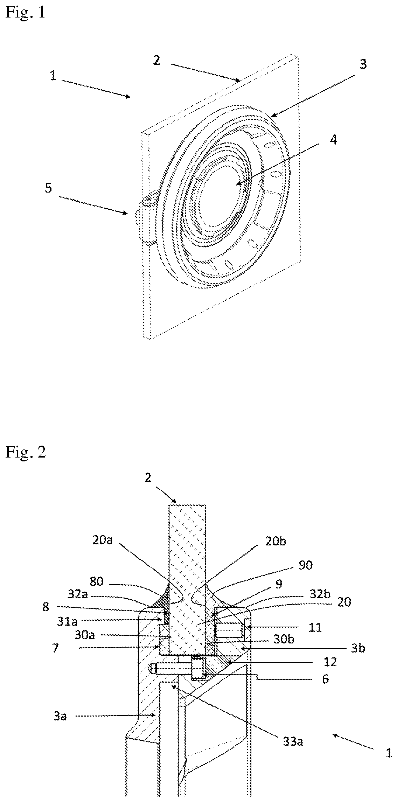

En relation avec les figures 1 et 2, il est décrit un ensemble formant porte 1 équipant une enceinte comportant une paroi 2 en verre pourvue d'au moins une ouverture de passage pour le passage de produits depuis l'extérieur de l'enceinte à l'intérieur de celle-ci et inversement. Comme indiqué précédemment, l'ensemble formant porte 1 est arrangé pour constituer un dispositif de jonction permettant de raccorder un volume clos, tel qu'un conteneur, sac ou similaires, équipé d'un ensemble de porte coopérant avec l'ensemble de porte 1 selon l'invention, sans rupture du confinement.

L'ensemble formant porte 1 comporte une bride 3 destinée à être fixée sur la portion de paroi 20 délimitant l'ouverture de passage d'une part et un ouvrant 4 monté mobile par rapport à la bride 3 entre une position de fermeture dans lequel l'ouvrant 4 obture l'ouverture de passage et une position d'ouverture. Dans l'exemple illustré, l'ouvrant 4 est monté mobile sur la bride 3 par une charnière 5.

Selon l'invention, la bride 3 de l'ensemble de porte 1 comprend deux éléments de bride 3a, 3b distincts l'un de l'autre et assemblés l'un à l'autre au moyen, dans l'exemple illustré, de vis d'assemblage 6. Avantageusement, les vis d'assemblage 6 sont masquées par des caches 12. Dans le mode de réalisation décrit, les éléments de bride 3a, 3b sont assemblés directement l'un à l'autre. Ainsi, la bride 3 est montée sur la portion de paroi 20 de l'enceinte, l'un des éléments de bride 3a étant situé à l'intérieur de l'enceinte tandis que l'autre élément de bride 3b est situé à l'extérieur de l'enceinte. Les éléments de bride 3a, 3b définissent ainsi respectivement une couronne intérieure à l'enceinte et une couronne extérieure à l'enceinte. Les couronnes intérieure et extérieure sont désignées par la suite avec les mêmes références que celles des éléments de bride 3a, 3b.

Les couronnes 3a, 3b présentent une surface 30a, 30b arrangée pour venir en appui directement ou indirectement sur la surface de la portion de paroi 20 en vis-à-vis de laquelle elle est placée. Ainsi, dans l'exemple illustré, la couronne intérieure 3a présente une surface d'appui externe 30a s'appuyant directement sur la surface intérieure 20a de la portion de paroi 20 tandis que la couronne extérieure 3b présente une surface d'appui interne 30b s'appuyant sur la surface extérieure 20b de la portion de paroi 20. S'agissant de la couronne extérieure 3b, l'appui est réalisé par des vis de pression 11 logées dans des trous ménagés dans la couronne extérieure 3b et dépassant de la surface d'appui interne 30b.

Afin d'éviter l'endommagement de la paroi en verre de l'enceinte lors du montage de l'ensemble formant porte 1, deux rondelles de protection 7, 9, avantageusement en matière plastique, sont intercalées respectivement entre la couronne intérieure 3a et la portion de paroi 20 d'une part et entre la couronne extérieure 3b et la portion de paroi 20 d'autre part. Ces rondelles de protection sont désignées par la suite de rondelles de protection intérieure 7 et extérieure 9. Dans le mode de réalisation illustré, la rondelle de protection intérieure 7, de forme annulaire, est logé dans une gorge délimitée par le rebord périphérique 31a de la couronne intérieure et un collet circulaire 33a extérieur de la couronne intérieure 3a. La rondelle extérieur 9 quant à elle comporte un corps annulaire dont la périphérie extérieure est pourvue d'un talon 90 s'étendant le long de la périphérie externe 32b de la couronne extérieure 3b d'une part et le long de la portion de paroi 20.

Afin d'assurer l'étanchéité de l'ensemble formant porte 1, ce dernier comporte au moins un joint d'étanchéité annulaire, avantageusement élastomère, et de préférence en silicone, intercalé entre la portion de paroi 20 et la surface d'appui de l'une au moins des deux couronnes 3a, 3b. Dans l'exemple illustré, l'ensemble de porte 1 comporte un seul joint d'étanchéité 8 intercalé entre le rebord périphérique 31a de la couronne intérieure 3a et la portion de paroi 20 de l'enceinte. Plus particulièrement, le joint d'étanchéité 8 est situé dans l'interstice délimité par le rebord périphérique 31a de la couronne intérieure 3a, la rondelle de protection intérieure 7 et la surface intérieure 20a de la portion de paroi 20. Il présente en outre un talon 80 s'étendant le long de la périphérie externe 32a de la couronne intérieure 3a d'une part et le long de la surface intérieure 20a de la portion de paroi 20.

L'écrasement du joint d'étanchéité 8 est effectué à l'aide des vis de pression 11. Les vis de pression 11 montées au travers de la couronne extérieure 3b et s'étendant au-delà de la surface d'appui intérieure de la couronne extérieure 3b viennent plaquer ainsi la rondelle de protection extérieure 9 contre la portion de paroi 20, pressant cette dernière contre la rondelle de protection intérieure 7 en écrasant conjointement le joint d'étanchéité 8.

Comme indiqué précédemment, l'assemblage des couronnes 3a, 3b est réalisé par des moyens d'assemblage, dans l'exemple des vis, sans que ces derniers ne traversent la paroi. Les trous de réception des vis sont ainsi ménagés sur les couronnes 3a, 3b pour être décalés radialement de la bordure de la portion de paroi 20 lorsque les couronnes 3a et 3b sont montées sur la paroi 2. Dans l'exemple illustré, les vis d'assemblage 6 traversent les couronnes 3a et 3b à proximité de la bordure de la portion de paroi 20, les trous de vis ménagés dans la couronne intérieure étant situés dans le collet circulaire 33a.

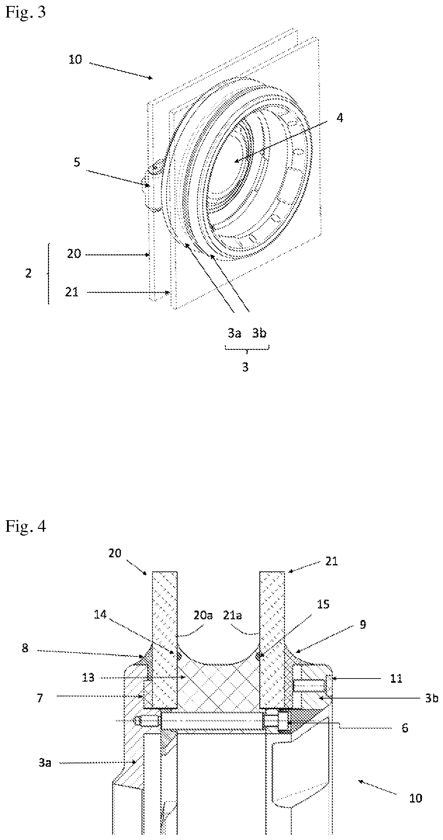

Les figures 3 et 4 illustrent un autre exemple de montage d'un ensemble formant porte 10 selon l'invention. Dans cet exemple illustré, l'ensemble formant porte 10 est monté sur une paroi d'enceinte formée de deux éléments de paroi 20, 21. Cet ensemble formant porte 10 reprend l'ensemble des éléments précédemment décrits si ce n'est que la couronne extérieure 3b et la rondelle de protection extérieure 9 viennent s'appuyer sur la portion de paroi 21a de l'élément de paroi 21 extérieur tandis que la couronne intérieure 3a, la rondelle de protection intérieure 7 et le joint d'étanchéité 8 viennent s'appuyer contre la portion de paroi 20a de l'élément de paroi 20 interne. Par ailleurs, et avantageusement, l'ensemble de porte 10 comporte en outre une entretoise 13 placée entre les deux éléments de paroi 20, 21.

Dans cet exemple, l'entretoise 13 est assemblée avec les éléments de bride 3a, 3b au moyen des vis d'assemblage 6, ces dernières traversant de part en part l'entretoise 13 pour relier les deux éléments de bride 3a, 3b, et ce sans traverser les éléments de paroi 20, 21.

Deux joints d'étanchéité 14, 15 annulaires, de section sensiblement circulaire, sont placés entre l'entretoise 13 et chacune des portions de paroi 20a, 21a des éléments de paroi 20, 21. De la même manière que pour assurer l'étanchéité côté interne de la bride 3 avec le joint d'étanchéité 8, l'étanchéité entre les deux éléments de paroi 20, 21 est assurée par écrasement desdits joints d'étanchéité 14, 15 via les vis de pression.

Dans les exemples décrits, les ensembles formant porte sont décrits en lien avec une simple ou double paroi en verre. Il est bien entendu évident que l'ensemble formant porte selon l'invention ne se limite pas à ce type d'enceinte, est qu'il peut être destiné à des enceintes présentant des parois réalisées en un matériau autre qu'en verre sans sortir du champ de l'invention.

L'invention est décrite dans ce qui précède à titre d'exemple. Il est entendu que l'homme du métier est à même de réaliser différentes variantes de réalisation de l'invention sans pour autant sortir du cadre de l'inventior tel que défini dans les revendications

## Revendications

1. Ensemble formant porte (1, 10) pour enceinte étanche, ladite enceinte comportant une paroi ayant une portion de paroi (20, 20a,21a) délimitant au moins une ouverture de passage en son sein, ledit ensemble formant porte (1, 10) comportant une bride (3) destinée à être fixé sur la portion de paroi (20, 20a, 21a) délimitant l'ouverture de passage et un ouvrant monté mobile sur la bride (3) entre une position de fermeture dans lequel l'ouvrant obture l'ouverture de passage et une position d'ouverture, la bride (3) comportant deux éléments de bride (3a, 3b) distincts l'un de l'autre assemblés entre eux par des vis d assemblage (6), l'un des éléments de bride (3a) définissant une couronne intérieure à l'enceinte présentant une surface d'appui (30a) arrangée pour venir en appui sur la surface intérieure de la portion de paroi (20, 20a), l'autre élément de bride (3b) définissant une couronne extérieure à l'enceinte présentant une surface d'appui (30b) arrangée pour venir en appui sur la surface extérieure de la portion de paroi (20, 21a), la mise en appui de la surface d'appui (30b) de la couronne extérieure avec la portion de paroi (20, 21a) étant réalisée au moyen de vis de pression (11) logées dans des trous ménagés dans la couronne extérieure et dépassant de la surface d'appui (30b), les vis d'assemblage (6) étant disposées pour présenter un décalage radial par rapport à la bordure de la portion de paroi (20, 20a, 21a) de manière à relier les couronnes intérieure et extérieure entre elles sans traverser la portion de paroi (20, 20a, 21a) interposée entre lesdits couronnes, les vis d'assemblage (6) et les vis de pression (11) constituant en outre des moyens de serrage de l'un au moins des deux éléments de bride (3a, 3b) contre la portion de paroi (20, 20a, 21a).

2. Ensemble formant porte (1, 10) pour enceinte selon la revendication 1 ou la revendication 2, **caractérisé en ce qu'**il comporte au moins une rondelle de protection (7, 9) destinée à être disposée entre la surface d'appui (30a, 30b) de l'un au moins de éléments de bride (3a, 3b) et la portion de paroi (20, 20a, 21a).

3. Ensemble formant porte (1, 10) pour enceinte selon la revendication 3, **caractérisé en ce que** la rondelle de protection (9) destinée à être disposée entre la surface d'appui (30b) de l'élément de bride (3b) définissant une couronne extérieure et la portion de paroi (20, 21a) comporte un corps annulaire ayant une périphérie extérieure pourvue d'un talon (90) s'étendant le long de la périphérie externe (32b) de la couronne extérieure d'une part et le long de la portion de paroi (20, 21a).

4. Ensemble formant porte (1, 10) pour enceinte selon l'une quelconque des revendications précédentes, **caractérisé en ce qu'**il comporte au moins un joint d'étanchéité (8) destiné à s'intercaler entre la surface d'appui (30a, 30b) de l'un au moins de éléments de bride (3a, 3b) et la portion de paroi (20, 20a, 21a).

5. Ensemble formant porte (1, 10) pour enceinte selon la revendication 5 lorsqu'elle dépend de la revendication 3, **caractérisé en ce que** le joint d'étanchéité (8) est situé dans un interstice délimité par le rebord périphérique (31a) de la couronne intérieure, la rondelle de protection intérieure (7) et la surface intérieure de la portion de paroi (20, 20a).

6. Ensemble formant porte (1, 10) pour enceinte selon l'un quelconque des revendications précédentes, **caractérisé en ce qu'**il comporte une entretoise (13) arrangée pour être disposée entre deux éléments de paroi (20, 21) formant la paroi de ladite enceinte.

7. Ensemble formant porte (1, 10) pour enceinte selon la revendication 7, caractérisé en ce l'entretoise est traversée par les vis d'assemblage (6) assemblant les couronnes intérieure et extérieure,

8. Ensemble formant porte (1, 10) pour enceinte selon l'un quelconque des revendications précédentes, **caractérisé en ce qu'**il est arrangé pour permettre le raccordement étanche d'un ensemble formant porte équipant un conteneur par l'intermédiaire d'un système à baïonnettes.

9. Enceinte étanche comportant au moins une paroi comprenant au moins une ouverture de passage pourvue d'un ensemble de porte selon l'un quelconque des revendications précédentes.

## Patentansprüche

1. Türbaugruppe (1, 10) für einen abgedichteten abgeschlossenen Raum, der abgeschlossene Raum umfassend eine Wand, die einen Wandabschnitt (20, 20a, 21a) aufweist, der mindestens eine Durchgangsöffnung darin begrenzt, die Türbaugruppe (1, 10) umfassend einen Flansch (3), der dafür vorgesehen ist, auf dem Wandabschnitt (20, 20a, 21a) befestigt zu werden, der die Durchgangsöffnung begrenzt, und ein Türblatt, das auf dem Flansch (3) zwischen einer geschlossenen Position, in der das Türblatt die Durchgangsöffnung verschließt, und einer offenen Position beweglich montiert ist, der Flansch (3) umfassend zwei voneinander verschiedene Flanschelemente (3a, 3b), die durch Montageschrauben (6) untereinander zusammengebaut sind, wobei eines der Flanschelemente (3a) eine innere Einfassung an dem abgeschlossenen Raum definiert, der eine Auflageoberfläche (30a) darstellt, die angeordnet ist, um zum Anliegen an der Innenoberfläche des Wandabschnitts (20, 20a) zu kommen, wobei das andere Flanschelement (3b) eine äußere Einfassung an dem abgeschlossenen Raum definiert, der eine Auflageoberfläche (30b) darstellt, die angeordnet ist, um zum Anliegen an der Außenoberfläche des Wandabschnitts (20, 21a) zu kommen, wobei das Anlegen der Auflageoberfläche (30b) der äußeren Einfassung an den Wandabschnitt (20, 21a) mittels Druckschrauben (11) durchgeführt wird, die in vorgesehenen Löchern in der äußeren Einfassung untergebracht sind und von der Auflageoberfläche (30b) vorstehen, wobei die Montageschrauben (6) zum Darstellen eines radialen Versatzes relativ zu der Kante des Wandabschnitts (20, 20a, 21a) eingerichtet sind, um die innere und die äußere Einfassung miteinander zu verbinden, ohne den Wandabschnitt (20, 20a, 21a) zu durchqueren, der zwischen den Einfassungen eingesetzt ist, wobei die Montageschrauben (6) und die Druckschrauben (11) ferner Spannmittel von mindestens einem der zwei Flanschelemente (3a, 3b) gegen den Wandabschnitt (20, 20a, 21a) bilden.

2. Türbaugruppe (1, 10) für einen abgeschlossenen Raum nach Anspruch 1 oder 2, **dadurch gekennzeichnet, dass** sie mindestens eine Schutzscheibe (7, 9), die dafür vorgesehen ist, zwischen der Auflageoberfläche (30a, 30b) von mindestens einem der Flanschelemente (3a, 3b) und dem Wandabschnitt (20, 20a, 21a) eingerichtet zu werden, umfasst.

3. Türbaugruppe (1, 10) für einen abgeschlossenen Raum nach Anspruch 3, **dadurch gekennzeichnet, dass** die Schutzscheibe (9), die dafür vorgesehen ist, zwischen der Auflageoberfläche (30b) des Flanschelements (3b), die eine äußere Einfassung definiert, und dem Wandabschnitt (20, 21a) eingerichtet zu werden, einen ringförmigen Körper, der einen Außenumfang aufweist, der mit einem Absatz (90) versehen ist, der sich einerseits entlang des Außenumfangs (32b) der äußeren Einfassung und andererseits entlang des Wandabschnitts (20, 21a) erstreckt, umfasst.

4. Türbaugruppe (1, 10) für einen abgeschlossenen Raum nach einem der vorstehenden Ansprüche, **dadurch gekennzeichnet, dass** sie mindestens eine Dichtung (8), die dafür vorgesehen ist, zwischen der Auflageoberfläche (30a, 30b) mindestens eines der Flanschelemente (3a, 3b) und dem Wandabschnitt (20, 20a, 21a) eingefügt zu werden, umfasst.

5. Türbaugruppe (1, 10) für einen abgeschlossenen Raum nach Anspruch 5, sofern dieser von Anspruch 3 abhängig ist, **dadurch gekennzeichnet, dass** die Dichtung (8) in einem Spalt gelegen ist, der durch den umlaufenden Rand (31a) der inneren Einfassung, die innere Schutzscheibe (7) und die Innenoberfläche des Wandabschnitts (20, 20a) begrenzt wird.

6. Türbaugruppe (1, 10) für einen abgeschlossenen Raum nach einem der vorstehenden Ansprüche, **dadurch gekennzeichnet, dass** sie einen Abstandshalter (13), der eingerichtet ist, um zwischen zwei Wandelementen (20, 21) angeordnet zu werden, die die Wand des abgeschlossenen Raums ausbilden, umfasst.

7. Türbaugruppe (1, 10) für einen abgeschlossenen Raum nach Anspruch 7, **dadurch gekennzeichnet, dass** der Abstandshalter durch die Montageschrauben (6) durchquert wird, die die innere und die äußere Einfassung montieren,

8. Türbaugruppe (1, 10) für einen abgeschlossenen Raum nach einem der vorstehenden Ansprüche, **dadurch gekennzeichnet, dass** sie zum Ermöglichen des abgedichteten Anschlusses einer Türbaugruppe, die einen Container ausstattet, über ein Bajonettsystem, angeordnet ist.

9. Abgedichteter abgeschlossener Raum, umfassend mindestens eine Wand, die mindestens eine Durchgangsöffnung, die mit einer Türbaugruppe nach einem der vorstehenden Ansprüche versehen ist, enthält.

## Claims

1. Door assembly (1, 10) for a sealed enclosure, said enclosure comprising a wall having a wall portion (20, 20a, 21a) delimiting at least one passage opening therein, said door assembly (1, 10) comprising a flange (3) intended to be fixed to the wall portion (20, 20a, 21a) delimiting the passage opening and a leaf mounted movably on the flange (3) between a closed position in which the leaf seals the passage opening and an open position, the flange (3) comprising two flange elements (3a, 3b) which are separate from one another and assembled together by assembly screws (6), one of the flange elements (3a) defining a ring inside the enclosure, which inner ring has a bearing surface (30a) arranged to bear on the inner surface of the wall portion (20, 20a), the other flange element (3b) defining a ring outside the enclosure, which outer ring has a bearing surface (30b) arranged to bear on the outer surface of the wall portion (20, 21a), the bearing of the bearing surface (30b) of the outer ring with the wall portion (20, 21a) being achieved by means of pressure screws (11) which are housed in holes provided in the outer ring and protrude from the bearing surface (30b), the assembly screws (6) being placed to be radially offset from the edge of the wall portion (20, 20a, 21a) so as to connect the inner and outer rings together without passing through the wall portion (20, 20a, 21a) interposed between said rings, the assembly screws (6) and the pressure screws (11) further constituting means for clamping at least one of the two flange elements (3a, 3b) against the wall portion (20, 20a, 21a).

2. Door assembly (1, 10) for an enclosure according to claim 1 or claim 2,
**characterized in that** it comprises at least one protective washer (7, 9) intended to be placed between the bearing surface (30a, 30b) of at least one of the flange elements (3a, 3b) and the wall portion (20, 20a, 21a).

3. Door assembly (1, 10) for an enclosure according to claim 3,
**characterized in that** the protective washer (9) intended to be placed between the bearing surface (30b) of the flange element (3b) defining an outer ring and the wall portion (20, 21a) comprises an annular body having an outer periphery provided with a heel (90) extending both along the outer periphery (32b) of the outer ring and along the wall portion (20, 21a).

4. Door assembly (1, 10) for an enclosure according to any of the preceding claims, **characterized in that** it comprises at least one seal (8) intended to be inserted between the bearing surface (30a, 30b) of at least one of the flange elements (3a, 3b) and the wall portion (20, 20a, 21a).

5. Door assembly (1, 10) for an enclosure according to claim 5 when dependent on claim 3, **characterized in that** the seal (8) is located in a gap delimited by the peripheral rim (31a) of the inner ring, the inner protective washer (7) and the inner surface of the wall portion (20, 20a).

6. Door assembly (1, 10) for an enclosure according to any of the preceding claims, **characterized in that** it comprises a spacer (13) arranged to be placed between two wall elements (20, 21) forming the wall of said enclosure.

7. Door assembly (1, 10) for an enclosure according to claim 7,
**characterized in that** the spacer is passed through by the assembly screws (6) assembling the inner and outer rings.

8. Door assembly (1, 10) for an enclosure according to any of the preceding claims, **characterized in that** it is arranged to allow the sealed connection of a door assembly equipping a container by means of a bayonet system.

9. Sealed enclosure comprising at least one wall comprising at least one passage opening provided with a door assembly according to any of the preceding claims.
